Europäisches Patentamt

European Patent Office

Office européen des brevets

(19)

(11)    EP 0 500 315 B1

(12)    EUROPEAN PATENT SPECIFICATION

(45) Date of publication and mention
of the grant of the patent:
**21.07.1999  Bulletin 1999/29**

(51) Int Cl.6: **G06K 9/82**, G06K 9/64,
G06K 9/68

(21) Application number: **92301315.5**

(22) Date of filing: **18.02.1992**

(54) **Method of optical recognition and classification of pattern**

Verfahren zur optischen Erkennung und Klassifikation von Mustern

Procédé de reconnaissance et classification optique de formes

(84) Designated Contracting States:
**DE FR GB**

(30) Priority: **18.02.1991  JP 4401891**
**07.03.1991  JP 4151691**

(43) Date of publication of application:
**26.08.1992  Bulletin 1992/35**

(73) Proprietors:
• **SUMITOMO CEMENT CO. LTD.**
**Chiyoda-ku Tokyo 101-8677 (JP)**
• **Seiko Instruments Inc.**
**Chiba-shi, Chiba (JP)**

(72) Inventors:
• **Takesue, Toshiharu**
**Chiba-shi Chiba 281 (JP)**
• **Takemura, Yasuhiro**
**Inba-gun Chiba, 270-14 (JP)**
• **Yamazaki, Hideki**
**Kawaguchi Saitama (JP)**

(74) Representative: **Maggs, Michael Norman et al**
**Kilburn & Strode**
**20 Red Lion Street**
**London WC1R 4PJ (GB)**

(56) References cited:
**US-A- 4 790 024**

• **OPTICS COMMUNICATIONS vol. 75, no. 3/4 , 1**
**March 1990 , AMSTERDAM NL pages 225 - 30**
**XP101266 M LIANG ET AL 'Comparison of**
**discrimination capabilities of four types of**
**correlations'**

## Description

The present invention relates to a method of recognition and classification of patterns or images, to be utilized in the field of optical data processing, on a real-time basis. This invention relates to a method of recognition and classification of patterns to be used particularly for processing of data and information such as associative recognition processing, classification processing in the field of optical measurements and image processing.

US-A-4,790,024 discloses a vector discrimination apparatus for recognition of a vector. Multiple optical images of the vector are formed in the vicinity of various types of reference marks. Pattern matching is established between the multiple images and the various reference patterns formed on the reference marks.

Optics Communications 75(1990) 1 March, No. 3/4, Amsterdam, NL discloses a comparison of the discrimination capabilities of four types of conventional auto correlations.

A matched filter method and a joint transformation method have been proposed as an optical estimation for correlation of patterns.

The matched filter method comprises firstly Fourier transforming two-dimensionally each of the reference patterns, irradiating each of the reference patterns with a light beam to produce a so called "Fourier transformation hologram" to be used as a filter, and superposing the Fourier transformation of the pattern to be reviewed on the hologram filter so as to process correlation of the patterns.

The joint transformation method comprises recording a joint Fourier transformation pattern resulting from the pattern to be reviewed and each of the reference patterns, and irradiating the resulting recorded pattern with a plane wave beam, so as to process correlation of the patterns.

Both of the above methods provide the reference patterns in such number that the number of the reference patterns in group is ready in correspondence to the number of the patterns to be recognized and classified, and provides a detection result which has been obtained from the presentation of the pattern to be reviewed on the basis of the pattern having maximum correlation output, i.e. the auto-correlation output, and therefore, the number of reference patterns to be stored will be increased with an increase of the number of reference patterns to be reviewed. As a result, the loading of a two-dimensional or three-dimensional spatial photo modulator will be raised, and accordingly, the ability of the recognition-classification apparatus will be much limited by the ability of the spatial light modulator. Therefore, it is difficult to provide a practical and efficient apparatus for optical recognition and classification of the patterns.

The inventors have invented a method of improving the efficiency of recognition and association of a pattern, even with an increased number of reference patterns, in which the light intensity of irradiation to the reference patterns is changed or adjusted by feed-backing on the basis of the correlation which has been obtained by the said joint Fourier transformation method. However, it is desired that the number of patterns to be reviewed in parallel should be increased in practice.

Accordingly, an object of the present invention is an improved optical method of recognition and classification wherein the necessary number of reference patterns to be recorded can be significantly small, and many patterns can be recognized and classified in parallel.

It is another object of the present invention to provide an optical method of recognition and classification on real time basis.

An optical method of recognition and/or classification in which the invention is embodied is specified in claim 1. Some preferred features are specified in the dependent claims.

The objects and features of the present invention will become more apparent from the consideration of the following detailed description taken in conjunction with the accompanying drawings in which:

FIG. 1 shows generally a structure of a typical joint Fourier transformation optical system for use as an optical correlation processing system.

FIG. 2 shows schematically one pattern to be reviewed and a set of reference patterns displayed on the plane of a display device, wherein the joint Fourier transformation correlator is used.

FIG. 3 shows a schematic view of correlation outputs displayed on a display device, wherein the joint Fourier transformation correlator is used.

FIG. 4 shows a schematic illustration showing membership functions produced on the basis of the respective correlation output resulting from each of the reference patterns "V" and "E" with one pattern to be reviewed in accordance with the inventive method of recognition and classification of the pattern, wherein "a" indicates the position corresponding to the correlation output resulting from one pattern to be reviewed and a reference pattern "E", and "b" indicates the position corresponding to the correlation output resulting from one pattern to be reviewed and a reference pattern "V".

FIG. 5 is a graph showing the relation of the membership functions produced on the basis of the respective correlation of each of the reference patterns "V" and "E" with the other pattern to be reviewed in accordance with the inventive method of recognition and classification of the pattern, wherein "a" indicates the position corresponding to the correlation output resulting from one pattern to be reviewed and a reference pattern "E", and "b" indicates the position corresponding to the correlation output resulting from one pattern to be reviewed and a reference pattern "V".

FIG. 6 shows a graph showing the relation of the membership functions produced on the basis of the respective correlation of each of the reference patterns "V" and "E" with another pattern to be reviewed in accordance with the inventive method of recognition and classification of the pattern, wherein "a" indicates the position corresponding to the correlation output resulting from one pattern to be reviewed and a reference pattern "E", and "b" indicates the position corresponding to the correlation output resulting from one pattern to be reviewed and a reference pattern "V".

FIG. 7 shows a table showing schematically the membership values with regard to the measured correlation of each of the reference patterns "E" and "V" with an unknown pattern in accordance with the inventive method of recognition and classification of the pattern.

FIG. 8 shows schematically how to gain the patterns of the mutual correlation resulting from the reference patterns "E" and "H", to be used for recognition and classification of a pattern in accordance with the present invention.

FIG. 9 shows 15 graphs showing the relation of the membership functions produced on the basis of the respective correlation of each of the patterns (A, E, H, N, T, L, O, I, K, M, V, W, X, Y and Z) to be reviewed, with the two reference patterns (E, V) in accordance with the inventive method of recognition and classification of the pattern, wherein a solid line indicates a membership function prepared on the basis of the correlation with a reference pattern "E", and a dotted curve indicates a membership function prepared on the basis of the correlation with a reference pattern "V".

FIG. 10 is a table showing the recognition result with regard to the unknown patterns, as produced by using an experimentally obtained AND calculation method in accordance with the present invention, and the probability of the recognition result.

FIG. 11 shows schematically the structure of one of the optical correlation processing apparatus using matched filtering in accordance with the inventive optical method of recognition and classification.

FIG. 12 shows a schematic illustration of an optical system for another type of optical correlation processing apparatus to be used for the inventive optical method of recognition and classification.

FIG. 13 shows schematically one pattern (H) to be reviewed and reference patterns (E, V, X) wherein the jointed Fourier transformation correlator is used for recognition and classification of patterns.

FIG. 14 shows schematically the respective cross correlations of one pattern to be reviewed and the reference patterns as shown in FIG. 13, wherein the jointed Fourier transformation optical device is used for recognition and classification of patterns.

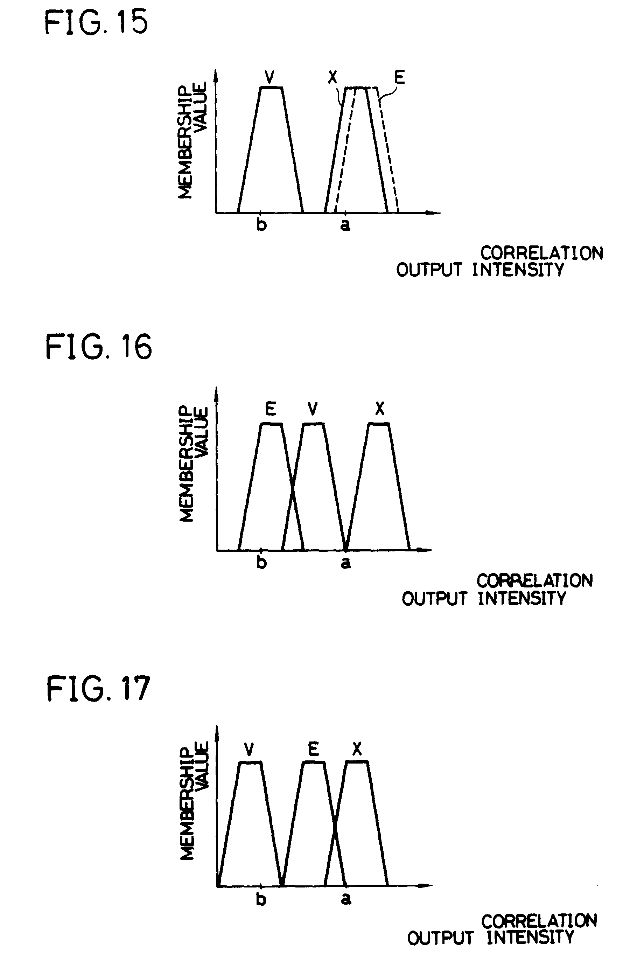

FIG. 15 shows a graph showing schematically the relation of the membership functions produced on the basis of the respective correlation output of each of the reference patterns (V, X, E) with one pattern (H) to be reviewed in accordance with the inventive method of recognition and classification of the pattern, wherein the dotted curve for "E" indicates a membership function prepared on the basis of the correlation with a reference pattern "E", and further wherein "a" indicates the position corresponding to the correlation output resulting from one pattern to be reviewed and a reference pattern "E", and "b" indicates the position corresponding to the correlation output resulting from one pattern to be reviewed and a reference pattern "V".

FIG. 16 is a graph showing the relation of the membership functions produced on the basis of the respective correlation of each of the reference patterns (V, X, E) with another pattern to be reviewed in accordance with the inventive method of recognition and classification of the pattern, and further wherein "a" indicates the position corresponding to the correlation output resulting from one pattern to be reviewed and a reference pattern "E", and "b" indicates the position corresponding to the correlation output resulting from one pattern to be reviewed and a reference pattern "V".

FIG. 17 is a graph showing the relation of the membership functions produced on the basis of the respective correlation of each of the reference patterns (V, X, E) with the other pattern to be reviewed in accordance with the inventive method of recognition and classification of the pattern, and further wherein "a" indicates the position corresponding to the correlation output resulting from one pattern to be reviewed and a reference pattern "E", and "b" indicates the position corresponding to the correlation output resulting from one pattern to be reviewed and a reference pattern "V".

FIG. 18 shows a table showing a calculated overlap area of the membership functions, resulting from a pair of patterns to be reviewed, and each of the reference patterns "E", "V" and "X", in order to select an appropriate pair with one of the reference patterns, in accordance with the inventive method of recognition and classification of the pattern.

FIG. 19 shows a table showing calculated maximum membership values, resulting from the pair of patterns to be reviewed and each of the reference patterns "E", "V" and "X", in order to select an appropriate pair with one of the reference patterns, in accordance with the other method for selecting the appropriate pair.

FIG. 20 shows the results of calculations of the necessary number of reference patterns, and the probability, for recognizing 1,000 patterns.

FIG. 21 shows a table showing membership values with regard to the measured correlation output of each of the reference patterns "E" and "V" with unknown pattern, in accordance with the inventive method of recognition and classification of the pattern.

FIG. 22 shows schematically a portion of the optical system for normalization of the correlations as detected, in accordance with the inventive optical method of recognition and classification.

FIG. 23 shows a schematic illustration of an optical system for for another type of optical correlation processing device to be used for the inventive optical method of recognition and classification.

In accordance with the present invention, a correlation is estimated between respective ones of several patterns which should belong to several classes, and each of the reference patterns, so as to gain correlations showing the common features between each of the respective reference patterns and the respective pattern to be reviewed, for each of the patterns to be recognized or classified, in the same number as that of the reference patterns. The *set* of resulting correlations is represented by a membership function involving time-dependent fluctuations of the spatial light modulator, and the fluctuation or change of the correlations due to speckle noise in the system.

When a pattern to be reviewed is to be recognized and/or classified, a comparison with said resulting membership function is carried out on the basis of the respective correlations with each of the reference patterns. The degree of matching with the class to which the pattern shall belong can be gained by a minimum value(s) of the membership values or the average of the membership values in a certain range.

In order to optimally classify a pattern into a certain class with a small number of reference patterns, a couple (pair) of reference patterns are selected or determined with less membership function overlap in each of the classes in response to the same reference pattern and then, membership functions are selected in response to the small number of reference patterns. Then, the classification of the pattern to be reviewed is carried out by comparing the resulting membership functions on the basis of the correlation with each of the reference patterns, and matching the minimum value of the membership values or the average value of the membership values.

The set of reference patterns with least overlapping is selected or determined by (1) calculating the number of regions in which the area of the overlapping range of the classes exceeds a predetermined area for each of the reference patterns; (2) making a set of reference patterns by adding the reference pattern with the minimum number of regions into a set of reference patterns, producing a new set of reference patterns and adding to that set the reference pattern with the second lowest number of regions; (3) counting in all combinations between one specified class and another specified class, the number of overlapping ranges of the membership functions corresponding to the reference patterns having a larger area than the predetermined areas in each pair of classes; (4) counting the number of pairs at which the said number of overlapping ranges matches the said number of reference patterns; and (5) stopping adding reference patterns into the set of reference patterns, and fixing the number of reference patterns in the set, when the counted number of pairs is less than a predetermined number.

The combination of reference patterns in the set with less overlapping can be determined by (1) calculating the number of regions in which the maximum membership value in the overlapping range of the classes exceeds the predetermined value for each of the reference patterns; (2) making a set of reference patterns by adding the reference pattern with the minimum number in order from said least number of regions into a set of reference patterns, producing a new set of reference patterns; (3) counting in all combinations between one specified class and another specified class, the number of overlapping ranges of the membership functions corresponding to reference patterns having larger areas than the predetermined area in each pair of classes; (4) counting the number of pairs at which the said number of overlapping ranges matches the said number of reference patterns; and (5) stopping adding reference patterns into the set of reference patterns, and fixing the number of reference patterns in the set at which the counted number of pairs is less than a predetermined number.

The present invention is further illustrated by the following examples, but should not be interpreted for the limitation of the invention.

[EXAMPLE 1]

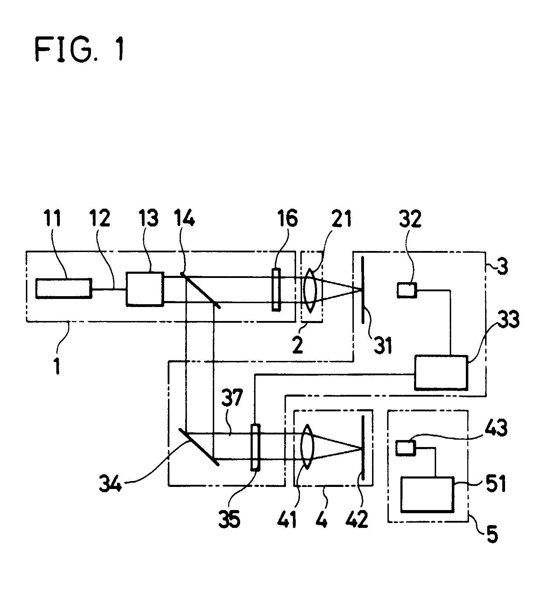

FIG. 1 shows schematically one preferred embodiment of the inventive optical method of recognition and classification, in an optical arrangement view.

The optical arrangement view of FIG. 1 comprises a pattern output means 1, an optical Fourier transformation means 2, a pattern output means 3, an optical Fourier transformation means 4, and an optical detection means 5.

A coherent beam 12 emitted from a source 11 such as a semiconductor laser or a gas laser is transformed by a beam expander 13 into a beam having an appropriate diameter, and is divided by a beam splitter 14 into the two beams.

A pattern to be reviewed and a group of reference patterns which have been displayed on a display plane 16 are read out by a coherent beam, and then Fourier transformed by a Fourier transformation lens 21, forming joint Fourier transformation patterns on a screen 31. Further, the resulting joint Fourier transformation patterns are read out by a two-dimensional image sensor 32, and the resulting pattern signals are sent to a liquid crystal driving circuit 33, which displays the patterns on a liquid crystal light valve (hereinafter refer to as "LCLV") 35, which patterns are read out by a beam 37, and again Fourier transformed by a Fourier transformation lens 41 forming Fourier transformation patterns on a screen 42, which patterns of the correlations are detected by a two-dimentional image sensor 43. A general type of such liquid crystal light valve may be a liquid crystal panel used for a liquid crystal TV and a display for a personal computer.

The respective correlation between the pattern to be recognized and each of the reference patterns is detected in the above described optical arrangement, and the resulting correlation is respectively processed in a computer 51, to gain respective membership functions in correspondence respectively to each of the reference patterns. Then, the recognition of the unknown pattern can be exerted by respective comparison of each of the resulting membership functions with the unknown pattern.

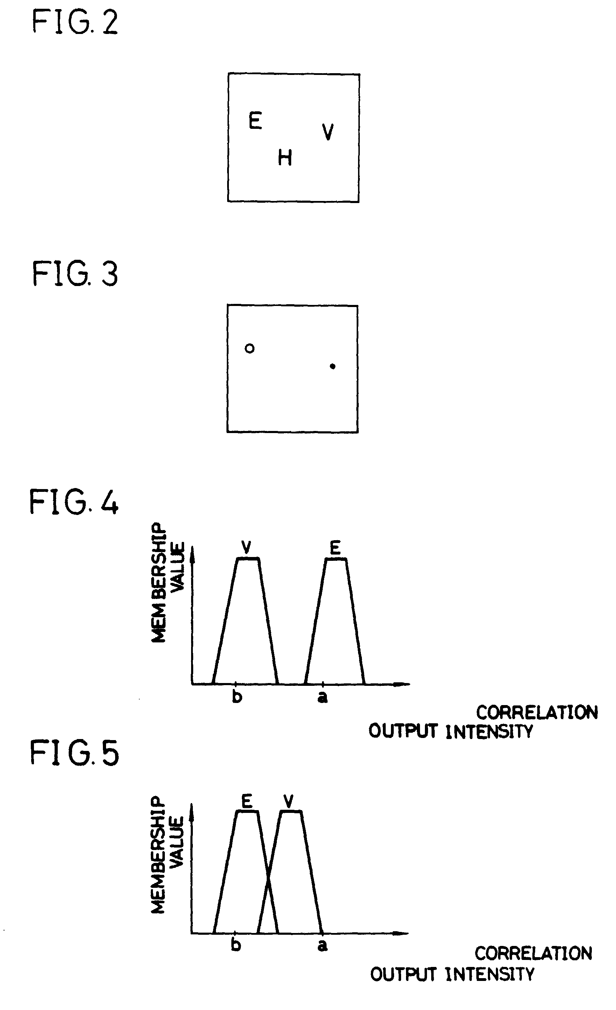

One example of the methods of preparation of a membership function will be described. For example, the group of reference patterns is two letters: E and V, and a pattern to be reviewed (recognized and classified) is H, and those patterns are displayed such that H is at the center, and E and V are along the same circle around H each at the same distance, as shown in FIG.2. Then, the output from the two-dimentional image sensor 43, which is the correlation output resulting from the pattern "H" respectively with each of the reference patterns appears at the positions respectively corresponding to those of the displayed reference patterns, as shown in FIG. 3, which patterns are detected as a presentation of light intensities.

The values of such correlations are indicated such that when the value is higher, the displayed circle is larger. The two parallel vertical bars and the horizontal bar which constitute "H" respond with each of the reference patterns and then, the resulting correlation outputs are as indicated in FIG. 3, which shows a significant difference in the values. The auto-correlation which appears at the position of the optical axis is not shown in FIG. 3 because it is not relevant.

The resulting correlation output intensity signals are sent to a computer 51, and stored in its memory. A series of patterns to be reviewed (recognized and classified) are sequentially displayed on display 16, and the peak values of the correlation intensities displayed are stored in a memory of the computer 51, in sequence. This operation is repeated a necessary number of times (multiple times) to gain a plurality of correlation outputs respectively for each of the reference patterns.

The peak values of the correlation output intensities will be fluctuated by the influence of e.g. speckle (background) noise of the coherent beam, the time-dependent instability of the performance of the pattern display 16 and LCLV 35, and the input timing of the signals from the two-dimensional image sensor 32. Therefore, one time measurement of the correlation output does not result in correct recognition and classification. Accordingly, the measurement is exerted several necessary times to gain a plurality of data, from which the average of the peak values in response to each of the classes and its standard deviation are caluculated, so as to gain a respective membership function of the peak values of the correlation output intensities in response to each of the patterns "E" and "V", which functions determine convex "fuzzy theory" sets.

For example, the range from the average value minus the standard deviation to the average value plus the standard deviation is assumed as the membership value of 1, and the outside of the range from the average value minus 3 times the standard deviation to the average value plus 3 times the standard deviation, i.e. the range below the average value minus 3 times the standard deviation and the range above the average value plus 3 times the standard deviation is assumed as the membership value of 0. In the range from the average value minus 3 times the standard deviation to the average value minus the standard deviation, and in the range from the average value plus the standard deviation to the average value plus 3 times the standard deviation, the membership value is indicated by a linear function, i.e. the membership function has a slope.

FIG. 4 shows a graphic illustration showing membership functions as indicating the peak value of the correlation output produced on the basis of the respective correlation resulting from each of the reference patterns "V" and "E" with one pattern "H" to be reviewed. Similarly, all of the membership functions for all of the classes to which the patterns are to be classified are produced, and stored together with information of such classes, in a computer 51. However, in the case where the standard deviation resulting from a plurality of measurements is significantly small, it is necessary to add somehow correction of the values.

When an unknown letter pattern is presented in place of "H" in FIG. 2, the resulting peak value in the correlation output intensity range resulting from the response to each of the reference patterns is sent to a computer 51, in which the peak value is compared respectively with each of the membership functions corresponding to each of the patterns to be recognized and classified. For example, the membership functions corresponding respectively to "H", "W" and "N" are shown respectively in FIGS. 4, 5 and 6. The peak values of the correlation output intensity ranges are such that respectively the coordinate at the position (a) indicates that for the pattern "E", and the coordinate at the position (b) indicates that for the pattern "V".

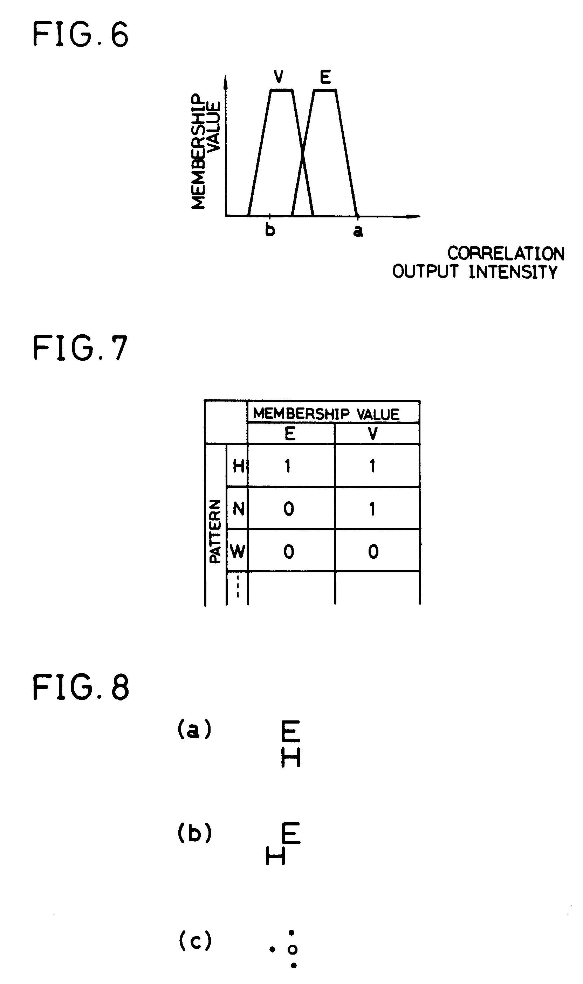

FIG. 7 shows a table showing how high the membership values in response to each of unknown patterns (H, N and W) are respectively at the positions (a) and (b). This table indicates only either of 1 or 0, but in general the height of each position can be located at a slanting zone, and therefore the membership value is in general an analog value.

When a "AND" estimation on a "fuzzy theory" is exerted on the membership values as shown in FIG. 7, the result is a minimum value of the membership values corresponding respectively to each of the patterns to be recognized, classified. Then, the membership values in response to the unknown pattern are 1, 0 and 0 respectively to the patterns "H", "W" and "N". Accordingly, the unknown pattern is "H" in 100 % probability. On the other hand, when several "0"s are found for the minimum values of the membership values, the minimum value will indicate the probability that the unknown pattern is it.

Further, the arithmetic mean of the membership values can be calculated from FIG. 7. In this case, the arithmetic means to the patterns "H", "N" and "W" are respectively 1, 0.5 and 0. Then, the degree of matching to each of the patterns can be estimated. However, the estimation can be gained even when there is zero correlation with a certain reference pattern. Therefore, the AND estimation on the basis of "fuzzy theory" gives less error, and the arithmethic mean estimation can be used as an assistant estimation method where the AND estimation can not give any answer. When a membership value of zero is given to only one reference pattern, and the membership values of the other reference patterns are 1 ( that may result from some shifts from the correct position when estimating the average), the AND estimation cannot give any correct answer. In this case, the arithmetic mean estimation can be used as a second means for gaining the degree of matching.

In this example, part of the membership functions plateau. However, any shape can be given provided only that the curve of the membership function does not have any concave portion, i.e. convex "fuzzy theory" set (i.e. it has a maximum).

How to gain the correlation output intensities, or where to gain the correlation output intensities can be either by detecting them over the whole light quantity in response to the range or area of the correlation output other than the peak value, or by detecting them by its average light quantity.

In general, the correlation output can be represented by the following equation, wherein the two patterns are represented respectively by A(x,y) and B(x,y);

$$I(x',y') = \iint A(x,y) \cdot B^*(x'-x,y'-y)dxdy$$

wherein * denotes a complex pair quantity.

It is apparent from this equation that the correlation output has the range or area which is two times the range of the pattern. Therefore, the whole light quantity or the average light quantity from the range can be detected over the range of the correlation.

FIG. 8 shows schematically how to gain the patterns of the mutual correlation resulting from the two patterns "E" and "H", wherein the two patterns are represented on the display with some vertical slide to avoid overlap. In this case, the correlation light quantity in response to the patterns "E" and "H" becomes at the peak, when the two patterns are completely at the same horizontal position as shown in FIG. 8 (a). And, when the patterns are slipped off or lagged in a shift length of the pattern size as shown in FIG. 8 (b), the vertical bar of the pattern "H" is vertically overlapped with the vertical bar of the pattern "E", and then, the correlation light quantity can be detected lower than the peak value.

FIG. 8 (c) shows the correlation light quantity distribution of the patterns "E" and "H" as formed. The central larger circle indicates the peak light quantity, and the smaller circles up and below the central circle indicate the response to the horizontal bar, and the smaller circle horizontally apart from the central circle indicates the response to the vertical bar. Therefore, the whole light quantity or the average light quantity of those patterns gives the information which is well responded to the features of each of the patterns. This information is not found in the peak light quantity.

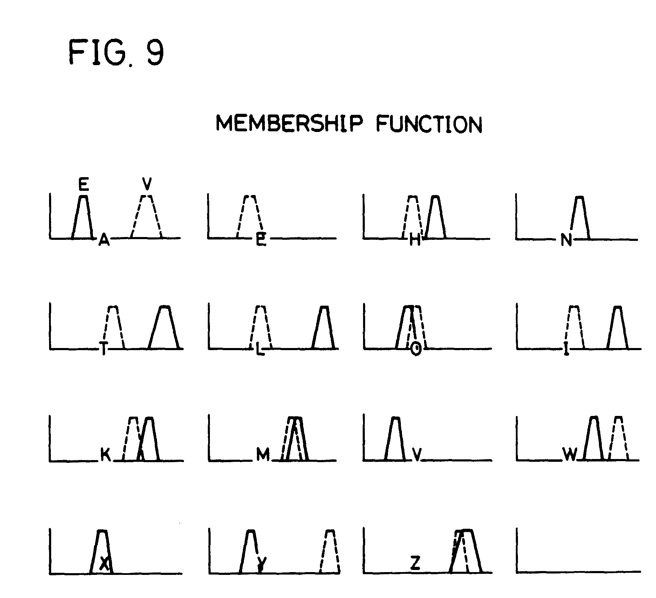

FIG. 9 shows 15 graphs showing the relation of the membership functions produced on the basis of the respective correlation of each of the patterns (A, E, H, N, T, L, O, I, K, M, V, W, X, Y and Z) to be reviewed, with the two reference patterns (E, V) in accordance with the inventive method of recognition and classification, wherein the solid line indicates the membership functions in response to the pattern "E", and the dotted line indicates the membership functions in response to the pattern "V", and further, the average light quantity is in an abscissa of the graph. Only one membership function is found in some cases, but this is due to the other membership function that is not shown being beyond or out of the graph scale.

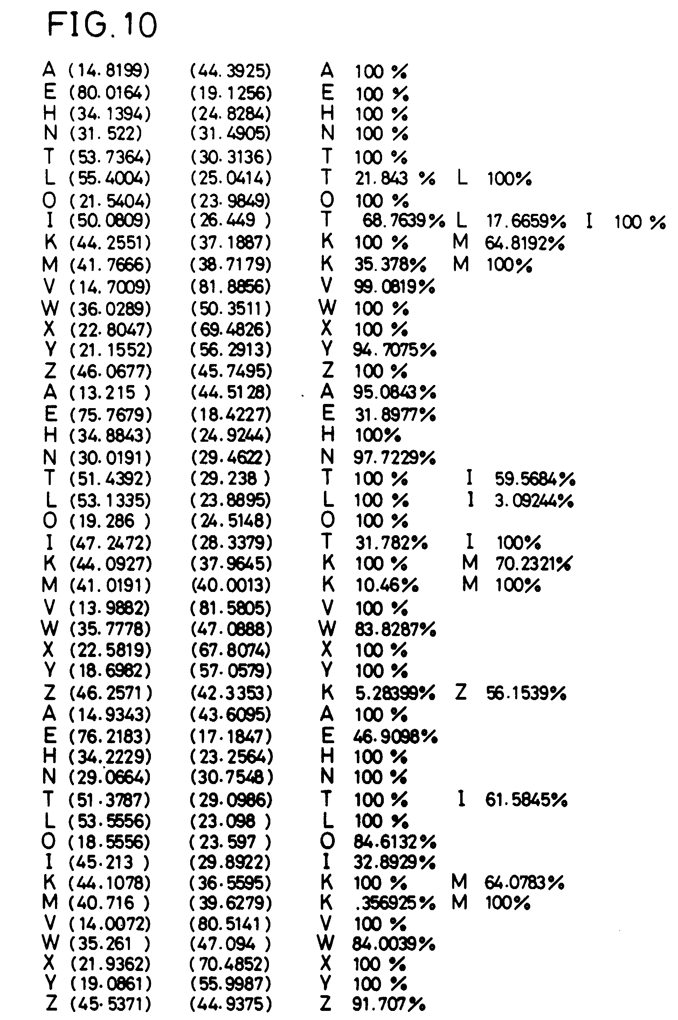

FIG. 10 is a table showing the recognition result with regard to the unknown patterns, as produced by using an experimentally obtained AND calculation method in accordance with the present invention, and the probability of the recognition result, wherein the unknown patterns are 15 patterns of the alphabet letters; A, E, H, N, T, L, O, I, K, M, V, W, X, Y and Z, and those letters are presented three times. The resulting degrees of classification to each of the letters are indicated, which degrees are estimated on the basis of the "fuzzy theory" AND estimation. The letters shown in the first column are input patterns, and the numerical values in the second and third colunms in parenthesis are the average light quantities of the correlations in response respectively to the reference patterns "E" and "V". Further, the letters at the fourth column are the letters which were given or recognized by the "fuzzy theory" AND estimation using the membership values as shown in FIG. 9. The numerical values in percentage at the fifth colunm are the probability of recognition.

In some cases one pattern has two or three candidates, but the letter with the highest probability can be chosen and then all those letters could be recognized or classified by only two reference patterns "E" and "V". Such good results could not be gained in the prior art correlation processing method using self-correlation.

Further, it is apparent from the result of FIG. 10 that there are two groups T, L and I; and K and M in which the letters are especially apt to be confused with each other. This is because each of the letters has common features, and then, the letter with the highest probability can be selected so as to execute easily recognition or classification. However, even when it is desired to gain complete recognition of the letters by removing the affection due to the small number of reference patterns, complete recognition can be accomplished merely by simple processing. The processing in which one reference pattern produces membership functions without an overlapping range in response to the confusable letter should be entered or added into the set of reference patterns to enable complete recognition or classification of the letters. The "fuzzy theory" AND calculation can enable identification of different letters when it has only one membership value being 0.

Further, when the classes or patterns to be classified or recognized are larger, i.e. the number of classes or patterns is raised, it can be readily coped with. The membership functions in response to the raised number of classes or patterns can be easily estimated or gained in accordance with the above-described method. In this case, it is unnecessary to out processing such as retraining to change weights of the connections to connect neurons of the artificial neural network. When the classes or patterns to be reviewed are increased in the artificial neural network, there will be raised problems of increase of retraining time because the number of neurons used is increased, but, this problem is not found in this method of recognition or classification of the patterns.

When this method is applied to the association of patterns, the width or range of the membership function may be increased or larger than the range of the above-described membership function. Especially, the original (perfect) pattern can be associated or regenerated from an imperfect pattern by using the wider range of the correlation intensities, i.e. extending the range of the membership functions to the lower correlation side. Further, the major patterns can be associated or regenerated from the information or patterns containing excess information, by using the wider range of correlation intensities, i.e. by extending the range of the membership functions to the higher correlation side.

Further, it can be used for judgement as to whether the pattern is imperfect or not. In this case, the processing is in reverse to the association processing, and when the correlation output is found exceeding the area of the membership function which is gained including the fluctuation of the intensities due to the optical arrangement, e.g. when the observed correlation intensity expands beyond the value of plus 3 times the standard deviation, the pattern is decided to be imperfect or defective.

In this example, 15 patterns can be recognized or identified by using merely two reference patterns. The performance of this method can be considered, or reviewed as follows:

When the dynamic range of the correlation output to be detected is 1:100, and the area in which the membership value to one membership function is not zero is 10, there are provided $10^N$ orthogonal ranges for N reference patterns. Therefore, the patterns to be recognized may be easily positioned or distributed in such ranges, and then, significantly many different patterns can be recognized or classified by using merely a few reference patterns. Further, this method is based on the "fuzzy theory" AND estimation, and then, when the "fuzzy theory" judgement can be implemented, it is unnecessary to assign the membership functions to each of the completely orthogonal ranges and the number of the patterns to be recognized or classified is significantly raised to the tremendous number.

Further, when the peak values of the correlation output, and the average light quantity of the receiving (detection) range corresponding to the area of the correlation pattern are used for the basis to calculate a membership function, two different informations in response to each of the reference patterns can be afforded. Accordingly, the number of necessary reference patterns can be further reduced, and then, more reliable recognition and classification can be gained from more information.

In this example, a joint Fourier transformation correlator was used for an optical system to gain the correlation output. This is advantageous in that addition of reference pattern(s) and rewriting out are easily effected. When it is desired to improve the performance of recognition and classification, a joint Fourier transformation device is not advantageous. Where the reference patterns and the patterns to be reviewed are Fourier transformed in parallel, the contrast in the multiple interference fringes formed on the screen 31 of FIG. 1 is decreased with an increase of the number of reference patterns, and then, the intensities of the gained correlation outputs are lowered, so as to decrease the dynamic range to which the membership functions are assigned or allotted, thereby lowering substantially the performance of recognition of the patterns.

Accordingly, the above described correlation processing method to avoid the lowering of the correlation output is more efficient. This processing method will be illustrated in the following example.

[EXAMPLE 2]

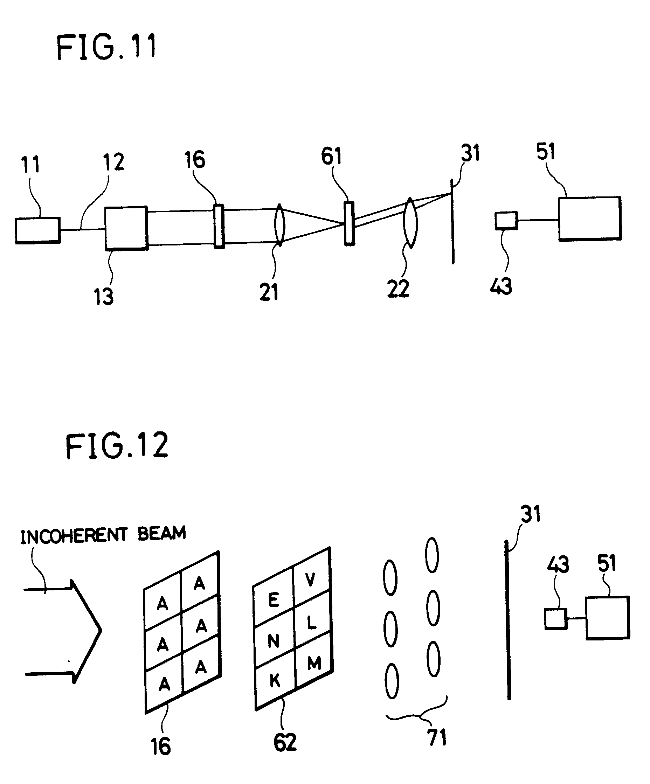

FIG. 11 shows schematically the structure of one of the optical correlation processing apparatus using matched filtering. FIG. 11 illustrates an optical arrangement of regenerating a known matched filter. A matched filter 61 has a multiple record which record has been stored by changing an irradiation direction of a plane wave beam respectively to each of the reference patterns. As shown in FIG. 11, the beam 12 emitted from laser source 11 is expanded to an appropriate diameter of the beam by a beam expander 13, and irradiates a pattern to be recognized, which has been formed on a display 16. Then, the beam having a complex amplitude distribution of the pattern is Fourier transformed by a Fourier transformation lens 21, and irradiates a multiple interference fringe pattern formed on a matched filter. Thereby, a diffraction beam is emitted in a direction of a plane wave which has been used for forming the Fourier transformation patterns of reference patterns on the filter, from the corresponding Fourier transformation patterns of the reference patterns having the same frequency as that of the pattern to be recognized.

The diffraction beam is focused on a screen 31 by a focusing lens 22, forming a cross-correlation between the pattern to be recognised and each of the reference patterns, and further forming a convolution between them. Because the positions of the cross-correlation patterns to be represented have been known, the peak values of the correlation output intensities at those positions or the whole light quantities around those positions can be easily detected.

Further, correlation output intensities regarding the other patterns to be recognized are similarly detected. The process for gaining a membership function is similar to that of Example 1, and so, is not described again.

In this example, a matched filter does not have overlap of Fourier components among the reference patterns, and so, the lowering of the contrast in the correlation outputs due to the increase of the number of reference patterns is not so much. Therefore, the lowering of the dynamic range to be assigned to the membership functions is not so much, and significantly more patterns can be recognized by using a lower number of reference patterns.

Further, the other type of joint Fourier transformation correlator can be used to give similar processing results. For example, an array of lenses can be used to Fourier transform separately and in parallel and in joint each of the reference patterns and patterns to be recognized. Thereby, there is resolved a problem of overlapping Fourier components of each of the reference patterns to lower the contrast of cross-correlation intensities to result from the reference patterns and the patterns to be recognized. Further, addition of reference patterns and substitution of reference patterns can be enabled, giving flexibility of the processing. For example, it can satisfy the need of portional substitution of the reference patterns when the ready set of the reference patterns can not completely recognize (separate) the patterns to be recognized.

Examples 1 and 2 use a coherent beam, and so the parallel shift is very strong. This is because the positions of the correlation outputs as formed are parallel shifted or moved depending on the parallel shift of the input patterns.

The next Example illustrates a relatively simple optical arrangement which can be easily integrated.

[EXAMPLE 3]

FIG. 12 shows a schematic illustration of an optical system of a known type using an incoherent beam. In this optical arrangement, a display 16 and a mask 62 for reference patterns are closely assembled, so as to focus an output of a product between a pattern to be recognized on a display 16 and each of reference patterns formed, on a screen 62 by using an array 71 of focusing lenses, The outputs from each of the resulting focused reference patterns are detected by a two dimentional photo image sensor 43.

Patterns to be recognized are arranged in array on a display 16, using each element corresponding respectively to each mask 62.

In this example, a cross correlation peak resulting from the pattern to be recognized and each of the reference patterns is detected. Following the above operation, further the other patterns to be recognized are displayed in sequence on the display, and then, membership functions corresponding to each of the reference patterns are prepared for each of the patterns to be recognized, and then the same processing as that of Examples 1 and 2 can be done. However, there is no allowance for parallel shifting of input patterns, but the device in accordance with this method has a simple construction and can be easily integrated.

[EXAMPLE 4]

FIG. 1 shows generally a structure of a typical joint Fourier transformation optical system to be used for a optical correlation processing system

The optical arrangement of FIG. 1 has a pattern output means 1, an optical Fourier transformation means 2, a pattern output means 3, an optical Fourier transformation means 4 and an optical detection means 5.

A coherent beam 12 emitting from a laser source 11 reads out a pattern to be recognized and each of the reference patterns formed on a display 16, and is focused on a screen 31 by a Fourier transformation lens 21, forming joint Fourier transformation patterns. These Fourier transformation patterns are read out by a two dimentional photo image sensor 32, and diplayed on a LCLV 35 of electric addressing type through a liquid crystal driving circuit 33. The displayed patterns are read out by a beam 37 that is focused on a screen 42 by a Fourier transformation lens 41, forming correlation intensities, which patterns are detected by a two dimensional image sensor 43.

In the inventive method, a correlation between a pattern to be recognized and each reference pattern is detected by the above mentioned optical arrangement, and then, each of the membership functions is prepared on the basis of respective correlation (degree) between each of the patterns to be reviewed and each of the reference patterns, and the prepared membership functions are respectively compared with each other so as to gain recognition or classification of the unknown patterns to be reviewed.

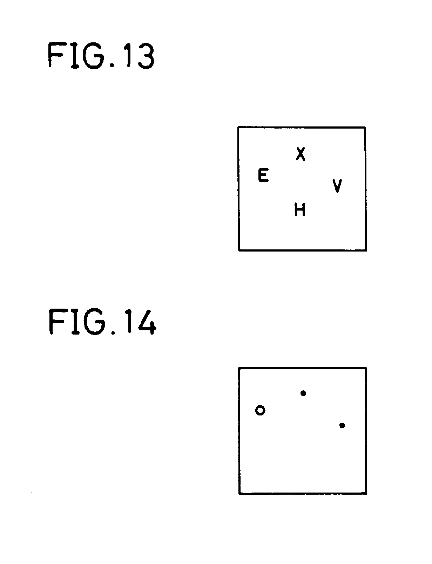

The membership function is gained as follows: FIG. 13 shows schematically respective position of one pattern (H) to be reviewed and reference patterns (E, V, X) as presented on a display correlator 16, in which case the joint Fourier transformation optical device is used for production of the membership function. Each of the patterns is apart from each other at similar distance, in which the reference patterns E, V and X are along the same circle of the center of the pattern H. The output of respective correlation between the letter H and each of the reference letters, i.e. the output from a two-dimensional image sensor 43 is respectively represented at the positions corresponding respectively to the positions of each of the reference letters, and can be detected as a light intensities as shown in FIG. 14.

Here, when the peak value of the correlation output is higher, the circle as shown is larger. Each of two parallel vertical bars and horizontal bar consitituting the letter "H" will respond respectively to each of the vertical bar(s) and horizontal bar(s) of respective reference pattern, so that a difference in correlation output occurs as shown in the drawings. The output of the auto-correlation which will appear on an optical axis is not shown in FIG. 14. FIG. 14 shows schematically the respective cross-correlations on the basis of one pattern to be reviewed and the reference patterns as shown in FIG. 13, in which case the jointed Fourier transformation optical correlator is used for pattern recognition and classification.

The output of the respective correlation as detected is sent to a computer 51 of FIG. 1, and stored therein, and then, each of the patterns to be reviewed is shown on a display device 16. Then, the respective peak of the outputs as shown on the display device 16 is detected and stored respectively in a computer 51. Further, such processing is carried out several times for each of the patterns to be reviewed. Fluctuation of the peaks of the correlation output will occur because of speckle noise of the used coherent beam, time passage instability of display device 16 and LCLV 35, and fluctuation of input timing of the signals fed from a two-dimensional image sensor 32. Merely one measurement of the correlation outputs does not have enough creditability of the data for gaining correct recognition and classification. Therefore, in accordance with the inventive method, firstly an average of the peak of the correlation output respectively in response to the patterns E, V and X, and the standard deviation of the measured output are calculated, and then, the respective membership functions of the correlation outputs regarding each of the patterns E, V and X is assumed as a shape of trapezoid, e.g. the membership value at the range from the average value to over the standard deviation is assumed to be 1, and the membership value at the range from the average plus three times the standard deviation is 0, so that the slope of the trapezoid shape has the length of one to three times the standard deviation.

FIG. 15 shows a graph showing schematically the relation of the membership functions produced on the basis of the respective correlation of each of the reference patterns (V, X, E) with one pattern (H) to be reviewed in accordance with the inventive method of recognition and classification. Further, the membership functions respectively regarding all of the classes to be reviewed are prepared, and they together with information of the classes to be reviewed are stored in a computer 151. Further, some correction should be carried out if necessary because standard deviation may be exceptionally low only from the small number of measurement.

An unknown pattern to be reviewed can be recognized by counting a membership value of the respective membership function in response to each of the reference patterns with each unknown pattern and then regarding the minimum membership value among the counted membership values or the average of the counted membership values as a degree as to how the pattern to be reviewed belongs to the specified class. Accordingly, with only a small number of reference patterns, as small as possible, a set of reference patterns having high performance of recognition or classification can enable a higher probability of recognition to be gained or reduce error of recognition as well as significantly reduce the time needed for recognition or classification of patterns.

The set of reference patterns can be gained as follows:

FIG. 15 shows a graph showing schematically the relation of the membership functions produced on the basis of the respective correlation of each of the reference patterns (V, X, E) with one pattern (H) to be reviewed in accordance with the inventive method of recognition and classification of the pattern.

FIGS. 16 and 17 respectively show the relation of the membership functions produced on the basis of the respective correlation of each of the reference patterns (V, X, E) respectively with another pattern to be reviewed, and with the other pattern to be reviewed.

The following processing should be carried out to classify rationally with the number of used reference patterns being as low as possible. First of all, the area of the range with overlapping of the membership functions regarding the same reference pattern is regarded as a degree of overlapping and then, the number of regions in which the area of overlapping is larger than the predetermined value is counted.

The reference pattern having second minimum number would be added to the reference pattern having the minimum number and they would be added to the set of reference patterns, and the processing should be repeated to gain appropriate recognition or classification of patterns.

Next, the number of regions in which the area of the overlapping range of the classes exceeds the predetermined area for each of the reference patterns is estimated, and a set of reference patterns is made by adding the reference patterns with the minimum number in order from the lowest number of regions into a set of reference patterns to produce a new set of reference patterns, and then, among all combinations between one specified class and another specified class, the number of overlapping ranges of the membership functions corresponding to the reference patterns having a larger area than the predetermined area is calculated for each pair of classes, and the number of pairs at which the said number of overlapping ranges matches the said number of reference patterns is counted, and then, stopping adding the reference patterns into the set of reference patterns when the number of reference patterns in the set at which the counted number of pairs is less than the predetemined number.

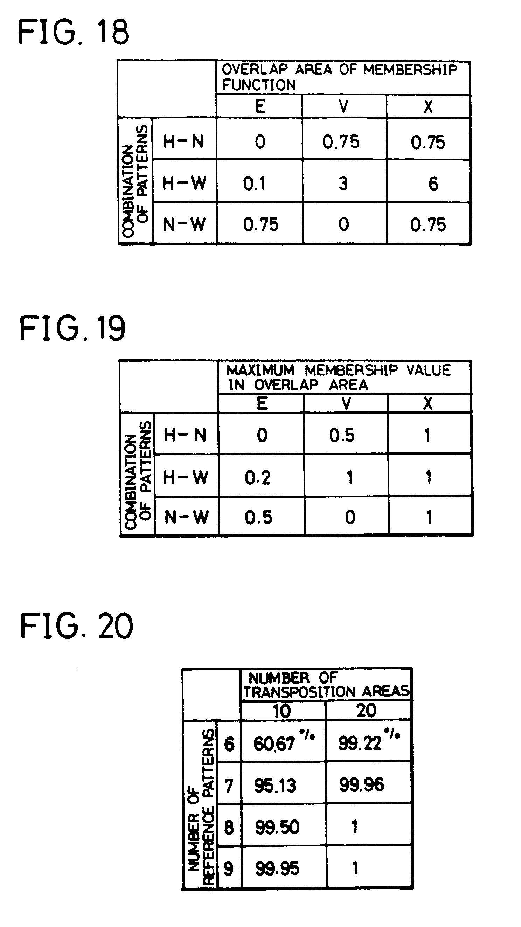

For example, the species of the combination of two patterns selected from three patterns H, N and W is 3, and then, the membership functions for the three species are prepared, and then the ranges of overlapping respectively in regard to each of the reference patterns are measured, and the result is shown in FIG. 18. FIG. 18 shows a table showing a calculated overlap area of the membership functions, resulting from the pair of patterns to be reviewed and each of the reference patterns "E", "V" and "X", in order to select an appropriate pair with one of the reference patterns. Here, when the area of overlapping of the membership functions in response to each of the reference patterns is larger, it can be more difficult to recognize the patterns. Accordingly, when it is desired to recognize completely the patterns, the case in which the overlapping area is relatively large is not good. Assuming that the case in which the overlapping area is larger than 0.5 is a confusable case in which error of the recognition can occur, then the number of regions in which the overlapping area is larger than 0.5 is counted. Then, such number in regard to each of the reference patterns E, V and X is counted to be respectively 1, 2, and 3. Then, first of all, the pattern "E" having minimum overlapping degree is selected, and then, the pattern "V" having next minimum overlapping area is selected. In this case, the set of reference patterns has 2 patterns, and the number of regions in which the overlapping area of the membership functions is larger than 0.5 is one among two combinations of the two reference patterns E and V and then in this case, the number of pairs at which the number of said regions matches the number of reference patterns is 0. Therefore, those three patterns can be recognized or classified by using only a set of two reference patterns E and V, and the pattern X is unnecessary. If the number of pairs at which the number of regions matches the number of reference patterns is several, it is a little difficult for some classes to recognize the patterns to be tested. In such case, adding the reference pattern to the set of reference patterns is stopped by not admitting recognition of some classes. In other words, when the prepared membership functions are much overlapped with each other in special classes or cases, it will be difficult to discriminate the patterns each other.

A rational set of reference patterns can be selected on the basis of another standard. First of all, the maximum membership value in the overlap range in which the membership functions formed from cross-correlation of the patterns to be reviewed overlap each other is regarded as a degree of overlap, and then, the number of regions in which the maximum membership value is larger than the predetermined value is counted. Then, the pattern with the least such number is added in sequence to the set of reference patterns so as to produce a new set of reference patterns. Among all combinations of two reference patterns, the number of cases in which the number of the selected (or fixed) reference patterns contained in the set matches with the number of regions in which the membership functions in response to the same reference pattern having the overlap area larger than the predetermined value is counted, and then when the counted number becomes less than the desired number, the addition of further reference patterns to the set of reference patterns is stopped.

For example, there are three combinations resulting from three patterns H, N and W, and then, the maximum membership value in the overlap range of each of the membership functions in response to each of the reference patterns is estimated or measured, and the result is shown in FIG. 19. Here, when the maximum membership value in the overlap range of the membership functions in response to each of the reference patterns is higher, it will be difficult to recognize or to discriminate the two patterns to be reviewed. Therefore, when it is desired to discriminate completely two patterns, the case in which the maximum membership value is considerably higher than 0 is not good. Then, the region in which the maximum membership value in the overlap range of the membership function curves in response to each of the reference patterns is higher than 0.5 should be regarded as confusable, and then , the number of the regions in which such maximum value is higher than 0.5 is counted to be 1, 2 and 3 respectively in regard to the reference patterns E, V and X. Then, the pattern E having least overlapping is selected, and then, the pattern V having next less overlapping is selected as a reference pattern. Therefore, the set of the reference patterns has two patterns. The number of the regions in which the maximum value is higher than 0.5 among the overlap range of the membership function curves is 1 for all combinations of patterns to be reviewed. Therefore, the reference patterns to discriminate the pattern are the patterns E and V, and the pattern V is not necessary.

Where an overlap area of the membership functions is used as a standard as to how much the pattern to be reviewed should belong to the reference patterns, the range wider than the width of the standard deviation can be corresponding to the slope of the trapezoid of the membership function curve, and the probability of detecting the correlation pattern within this range will be statistically 33 percent. Then, the overlap area can indicate the distribution of its probability, and therefore, when an unknown pattern is recognized, high adaptability will be found. On the other hand, where the maximum membership value in the overlap range is used as a standard as to how much the pattern to reviewed should belong to the reference patterns, the worst value in the recognition processing can be considered in the recognition processing.

The membership values resulting from the correlation of each of unknown patterns and the respective membership function of each of the reference patterns can be estimated, and then, the minimum value of the membership values or the average of the membership values can be estimated to be used as a standard of the recognition.

FIG. 19 shows a table showing calculated maximum membership values, resulting from the pair of respective patterns to be reviewed and each of the reference patterns "E", "V" and "X", in order to select an appropriate pair with one of the reference patterns. There is possiblity that the worst membership value is 0.2 in regard to the patterns H and W with using the reference patterns E and V. In this case, two patterns can not be discriminated. However, this case is rare case and does not occur in practice.

The following consideration can be taken on the above methods. For example, where N reference patterns without less overlap at Fourier transform plane are ready to be used, and the number of patterns to be reviewed or recognized is M, and the range having the width of three times the standard deviation is R, and the dynamic range of the detector is D, the range without overlap, i.e. the number of orthogonal-regions :B = D/R. "Orthogonal region" means a region to which one pattern is assigned so that the pattern is not confused with the other pattern. Here, assuming that the spatial frequency of the pattern to be reviewed will have random distribution, it can be understood in term of probabilities (statistics). The number G of cases in which N of the reference patterns can be entered into B of the regions, in regard to one specified class: $G = B^{(N+M)}$. On the other hand, a complete recognition will need M of the classes to have respectively one difference region, in correspondence to all of the cases.

Therefore, the number of such cases is $_GP_M$. Then, the probability thereof P is in the following equation.

$$P = {}_GP_M / G$$

Assuming that the classes to be reviewed are 1,000, and the number of the orthogonal regions are 10 or 20, how many reference patterns are necessary will be reviewed, and then, the table of FIG. 20 is presented. "Transposition areas" in the table means the number of the "orthogonal regions". It is apparent from this table that the necessary number of reference patterns will be respectively 8 and 7 in cases where the number of orthogonal regions are 10 and 20. Therefore, the degree of overlap of the membership function curves should be considered while reference patterns should be added to the set of reference patterns, which will lead to the combinations of reference patterns to discriminate unknown patterns.

Using the set of reference patterns E and V, the method of recognition will be described.

Unknown pattern is used in place of the letter "H" in FIG. 13, and the respective peak of the correlation outputs in response to each of the reference patterns is detected and stored in a computer 51 of FIG. 1, and compared with the membership function curves of each of the patterns to be recognized. For example, the membership function curves are estimated respectively on FIGS. 15, 16 and 17. The respective peak of the correlation output resulting from the unknown pattern is observed, i.e. the outputs corresponding respectively to the position of "a" point for the reference pattern E and "b" point for the reference pattern V.

FIGS. 18 and 19 show a table showing a calculated overlap area of the membership functions, resulting from the pair of unknown patterns and each of the reference patterns "E", "V" and "X", in order to select an appropriate pair with one of the reference patterns. In this example, the resulting membership values are anagogic, as shown in the tables, which indicates the value at the range of the slope of the trapezoid of the membership function curves.

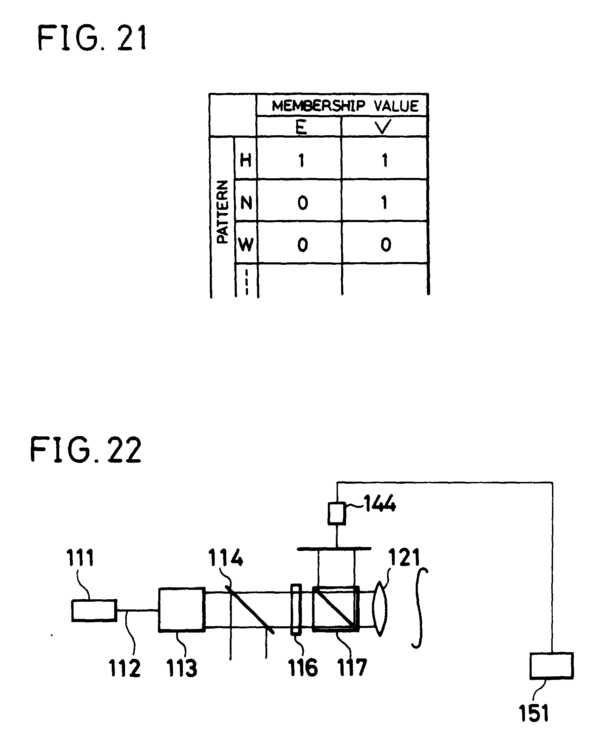

FIG. 21 shows a table showing how much (or high) the membership values in response to each of unknown patterns( H, N and W) are respectively at the positions "a" and "b".

The membership values of FIG. 21 suggest that a fuzzy theory AND calculation can be proceeded to gain a minimum of the membership value in response respectively to each of the patterns to be recognized, and the minimum of the membership value is 1, 0 and 0 respectively in response to the reference patterns H, W and N to be reviewed, and therefore, the unknown pattern shall be H with probability of 100 %. On the other hand, when several cases are found in which the minimum is not 0, the degree as to how much the pattern should belong to the specified class can be judged on the basis of the minimum.

Further, the arithmetic mean of the membership value as shown in FIG. 21 can be used to judge such degree, i.e. the respective mean in response to the patterns H, W and N in regard to unknown pattern is respectively 1, 0.5 and 0. Therefore, the degree of recognition of an unknown pattern can be somehow confirmed or found. However, where the arithmetic mean is used, there is possibility of error correlation (the membership value is 0) with a certain reference pattern but the answer can be obtained. The "fuzzy theory" AND calculation can avoid error, but the arithmetic mean can be used when the "fuzzy" calculation is difficult. For example, when the membership value is 0 to one reference pattern, but the value for the other reference patterns is 1 then the AND calculation does not give the correct answer, and the arithmetic mean should be used as a next means.

In this example, a part of the membership function curve has a plateau, and the curve of the membership function can be any shape having no convex, to which the "fuzzy theory" can be applied. In this example, the standard deviation is taken as a basis for preparation of membership functions, and the width of three times the standard deviation is regarded as a degree of the range of the membership function, but the other parameter can be used to judge the degree. For example, when the range in which the membership value is 1 is in the width of two times the standard deviation, the correlation output can be detected in about 97 % in a statistic view. Therefore, about 100 % of the classes to be recognized can be detected, but the membership function will be broad, and then, it becomes somehow difficult to discriminate from the other class.

The correlation output can be detected from the whole range of the output pattern except the peak value to gain the whole light power or the average light power of the detection range. The correlation output I (x',y') can be represented by the following equation wherein the two patterns are represented by A(x,y) and B(x,y).

$$I(x',y') = \iint A(x,y) \cdot B^*(x'-x,y'-y)dxdy$$

wherein * denotes a complex paired (conjugated) quantity.

From this equation, it is apparent that the correlation output has the width of two times the diameter of the pattern. Therefore, the whole light power or average power in this range can be taken from the peak value.

FIG. 8 shows schematically how to gain the pattern distribution of the mutual correlation resulting from the two patterns "E" and "H", to be used for recognition and classification of patterns. In this case, the pattern E and the pattern H are vertically shifted to avoid overlap. The output of the correlation between the patterns E and H becomes a peak value as shown in FIG. 8 (a) when the two patterns are completely overlapped, and the light power due to the correlation can be lower than the peak value, due to one vertical bar of pattern H being overlapped with the vertical bar of pattern E as shown in FIG. 8 (b) when the two patterns are shifted a distance of the pattern size.

FIG. 8 (c) shows the light power of the correlation between the patterns E and H, wherein the larger circle at the center indicates the light power of the peak, and the smaller circles vertically apart from the center indicate the power of the horizontal response, and the smaller circle horizontally apart from the center indicates the power of the vertical bar. Therefore, those powers or average powers have respective features or information of each of the patterns, which features are not shown in the peak light power.

FIG. 9 shows 15 graphs showing the relation of the membership functions produced on the basis of the respective correlation of each of the patterns (A, E, H, N, T, L, O, I, K, M, V, W, X, Y and Z) to be reviewed, with the two reference patterns (E, V). The real curve indicates the membership function in regard to the pattern E, and the dotted line indicates the membership function in regard to the pattern V, and the average light power of the correlation output is plotted in coordinate. In some cases, only one membership function is found, which suggests that another function can not be indicated in the scale of the graph.

FIG. 10 is a table showing the recognition result with regard to the unknown patterns, as produced by using an experimentally obtained AND estimation method, and the probability of the recognition result. The unknown patterns are the same as in FIG. 9, wherein a three time measurement is presented by using the "fuzzy theory" AND calculation, to present the recognition result of each of the letters. The resulting degrees of classification each of the letters are indicated, which degrees are estimated on the basis of the "fuzzy theory" AND estimation. The letters shown in the first colunm are input patterns, and the numerical values in the second and third colunms in parenthesis are the average light quantities of the correlations in response respectively to the reference patterns "E" and "V". Further, the letters at the fourth column are those given or recognized by the "fuzzy theory" AND estimation using the membership values as shown in FIG. 9. The numerical values in percentage at the fifth colunm are the probability of the recognition.

There were found some cases with some confusion, i.e. bad recognition, i.e. one pattern has two or three candidates, the letter with the high probability can be choosen, but it can be concluded from the better result, i.e. the cases in that the letters can be recognized with high probability that all those letters could be recognized or classified by only two reference patterns "E" and "V". Such good results could not be gained in the prior art correlation processing method using commonly an autocorrelation.

In this example, the set of reference patterns can be made as shown in FIGS. 18 and 19, the set of reference patterns E and V can enable complete discrimination of three patterns H, N and W, and the separation of the other letters is not enough.

Further, it is apparent from the result of FIG. 10 that there are found two groups of T, L and I; and K and M in which groups the letters are especially apt to be confused with each other. This is because each of the letters has common features, and then, the letter with the high probability can be selected so as to execute easily the recognition or the classcification. However, even when it is desired to gain complete recognition of the letters with removing the affection due to the small number of reference patterns, complete recognition can be accomplished merely by simple processing. The processing in which one reference pattern produces membership functions without an overlapping range in response to the confusable letter should be entered or added into the set of reference patterns to enable accomplishment of complete recognition or classification of the letters. The "fuzzy theory" AND calculation can enable identification of a different letter when it has only one membership value being 0.

Further, when the classes or patterns to be classified or recognized are larger, i.e. the number of the classes or patterns is raised, it can be readily coped with. The membership functions in response to the raised number of classes or patterns can be easily estimated or gained in accordance with the above-described method. In this case, it is unnecessary to carry out the processing such as retraining with supervision to change weights of the connections to connect neurons of the artificial neural network. When the classes or patterns to be reviewed are increased in the artificial neural network, there will be raised problems of increase of retraining because the number of neurons used is increased. But, if enough of the reference patterns are prepared for use, such problem of confusion due to overlapping can be avoided.

When this method is applied to the association of the patterns, the width or range of the membership function may be increased or larger than the range of the above-described membership functions. Especially, the original (perfect) pattern can be associated or regenerated from an imperfect pattern by using the wider range of correlation intensities, i.e. extending the the range of the membership functions to the lower correlaion side. Further, the original patterns can be associated or regenerated from the information or the patterns containing excess information, by using the wider range of correlation intensities, i.e. by extending the range of the membership functions to the higher correlation side (The membership function has a wider slope to extend from 3 times the standard deviation to 4 or 5 times the deviation).

In this case, the range of the membership function extends for the region of imperfect pattern, or the pattern containing excess information, so the degree of overlapping among the membership functions will be higher. There are fewer orthogonal regions, and then the number of patterns which can be recognized or discriminated will be decreased.

Further, it can be used for judgement as to whether the pattern is imperfect or not. In this case, the processing is in reverse to the association processing, and when the correlation output is found exceeding the area of the membership function which is gained including the fluctuation of the intensities due to the optical arrangement, e.g. when the observed correlation intensities expands beyond the value of plus 3 times the standard deviation, the pattern is decided to be imperfect or defective.

The pattern contains excess information, so that the degree of cross region among the membership functions is bigger and there is less orthogonal region, and then the number of recognized patterns will decrease.

For example, there are provided as shown in FIG. 22, a beam splitter 117 between a pattern display 116 and a Fourier transformation lens 121, and a whole light quantity emitted from the pattern to be reviewed. The reference patterns are detected by a two-dimensional image sensor plane 144, which is transmitted to a computer 151 so as to enable processing of the correlation. The other optical arrangement is the same as that of FIG. 1 and is not shown in FIG. 22.

FIG. 22 shows schematically a portion of the optical system for normalization of the correlations as detected.

Upon using the light powers, the correlation powers corresponding to the pattern to be reviewed and each of the reference patterns are normalized to obtain normalized values. For example, when the correlation light power in response to each of the reference patterns is $X_N$, and the reduction of the correlation light power when the imperfect pattern is entered is $\Delta_N$, the correlation power in response to the imperfect pattern is $X_N - \Delta_N$ in non-normalization. When the normalization is proceeded, the light power of the perfect pattern is A, and the reduction in the light power of the imperfect pattern is D, the normalized values of the correlation light power are $X_N/A$ for the perfect pattern, and $(X_N - \Delta_N)/(A - D)$ for the imperfect pattern. Then, where the reduction is not significant, $A > D$, $(X_N - \Delta_N)/A * (1 + D/A)$ for the imperfect pattern. Therefore, the difference in the normalized value is D/A, and then, the reduction can be lowered in such degree.

Accordingly, the number of classes to be reviewed can be increased in the corresponding degree. Further, the normalisation on the basis of the whole power of the pattern to be reviewed and the reference patterns can remove somehow fluctuation of the performance of a spatial light modulator, and its instability, and imperfectness of the pattern. The light power of the reference patterns is B, the shift due to the fluctuation of the spatial modulator is E, and then, $B > E$, and the light powers of the correlation respectively when the pattern is perfect and imperfect are $X_N/(A + B)$, and $(X_N - \Delta_N)/(A - D + B - E)$. Further, when the fluctuation is lower, and imperfectness is less, $A + B > D + E$. Therefore, the normalization on the basis of the light power of the pattern to be reviewed gives a reduction of $(D + E)/(A + B)$, then, the affection by the imperfectness of the pattern and the fluctuation of the spatial light modulator can be removed to some extent.

Further, it can be used to judge whether the pattern is imperfect or not. In this case, in contrast to the association processing, if the range of the membership function including the fluctuation is broader than the diameter of three times the standard deviation, the pattern is judged to be imperfect.

Further, when the peak values of the correlation output, and the average light quantity of the receiving (detection) range corresponding to the area of the correlation pattern are used for the basis to calucalate a membership function, two different informations in response to each of the reference patterns can be afforded. Accordingly, the number of the necessary reference patterns can be further reduced, and then, more reliable recognition and classification can be gained from more information.

Because the dynamic range of the two-dimensional detector of detecting the correlation output will be limited, the whole light power can not be received in some cases. Then, the maximum of the correlation output, i.e. the peak of the correlation output should be adjusted to an upper maximum sensitivity of the two-dimensional image sensor so that all of the peaks can be detected with correct sensitivity. However, when the whole power or the average light power should be detected over a whole range of the correlation output, the power other than the peak can not be detected to gain considerable height. In this case, the maximum sensitivity of the detector should be adjusted to the height lower than the peak of the correlation output, and then, the sensitivity to detect the light power at the neighbour of the peak position will be saturated, and then, the surrounding location pattern output can be efficiently detected with good linear response. Therefore, the effective and useful dynamic range of the detector can be used, so that the whole light power or the average power detected will be significantly useful.

In this example, a joint Fourier transformation correlator was used for an optical system to gain the correlation output. Then, this case is advantageous in that addition of reference pattern(s) and rewriting out are easily effected. When it is desired to improve the performance of recognition and classification, a joint Fourier transformation correlator is not advantageous. Where the reference patterns and the patterns to be reviewed are Fourier transformed in parallel, the contrast in the multiple interference fringes formed on the screen 31 of FIG. 1 is decreased with an increase of the number of reference patterns, and then, the intensities of the gained correlation outputs are lowered, so as to decrease the dynamic range to which the membership functions are assigned or allotted, thereby lowering substantially the performance of recognition of the patterns.

Accordingly, the correlation processing method to avoid lowering of the correlation output is more efficient. Then, this kind of processing method will be illustrated in the following example.

[EXAMPLE 5]

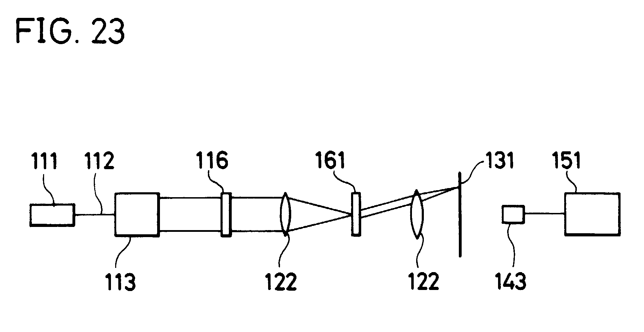

FIG. 23 shows schematically an optical arrangement for regeneration of the known matched filter. A used matched filter 161 has a multiple record of multiple reference patterns by changing the irradiation direction of a plane wave, corresponding to each of the reference patterns. A beam 112 emitting from a laser source 111 is expanded in its diameter into an appropriate diameter by a beam expander 113, and irradiates the pattern to be recognized as displayed on a display device. Then, a beam having a complex amplitude distribution of the patterns is Fourier transformed by a Fourier transform lens 121, and then irradiates the multiple interference fringe patterns presented on a matched filter. Then, the diffraction beams (light) are emitted (radiated) in the directions of the plane waves which have been used to prepare the reference patterns, respectively from the presented reference patterns having the same frequency spectrum as that of the pattern to be recognized.

This diffraction beam is focused on a screen 131 by a focusing lens 122, and then, one of the diffraction beam will have the cross-correlation pattern between the pattern to be recognized and each of the reference patterns, and the other one of the diffraction beam will be a convolution. Therefore, because each position of the reference patterns to appear is known, the peak and the whole light power of the cross-correlation output can be easily detected.

Such processing to detect the peak and whole power of the cross-correlation pattern can be repeated, and each of the membership functions can be easily made in a similar way to that of example 4.

In this case, a matched filter does not have overlap of auto-Fourier transform components formed from each of the reference patterns, and then, the contrast of the correlation output can be raised by increasing the number of reference patterns. Therefore, the dynamic range to be lotted to the membership functions can be readily increased, and then, a small number of reference patterns can discriminate significantly many patterns.

The above described matched filter has been prepared by a Fourier transform hologram technique, and a Fourier transform hologram can be used for the same purpose.

The other type of joint Fourier transformation device can be used to get the similar effect of the correlation processing.

Joint Fourier transformed patterns of each of the reference patterns with the pattern to be reviewed can be easily obtained by using an array of lenses. In this method, the reference patterns can be mutually overlapped so that the problem of decreasing the contrast of the cross-correlation outputs could be removed. The reference pattern can be easily added or rewritten in contrast to the matched filtering method, and more flexible processing can be enabled. For example, when the ready set of the reference patterns can not discriminate enough patterns, it can be easy to satisfy the need of rewritting of portions of the set of the reference patterns.

Examples 4 and 5 are based on a coherent beam system, in which the parallel shift of the input patterns formed is not so much. This is because the position of the correlation output is moved depending on the parallel shift of the input pattern.

The next Example illustrates a relatively simple optical system which can be easily integrated.

[EXAMPLE 6]

Next, the integration of the devices is illustrated by a simple optical embodiment.

FIG. 12 shows a known optical arrangement using an incoherent beam. In this arrangement, a display 116 is arranged close to a reference pattern mask 162, so that the output of a product of a pattern to be reviewed and the reference patterns formed on the display 116 is focused on a screen 131 by using a focus lens array 171, and then, the output from each of the reference patterns as formed on a two-dimensional photo transducing element 43 is detected.

The patterns to be reviewed are arranged in array on display device 116, in regions in response to the reference pattern mask 162.

In this case, the respective peak in the cross-correlations of each of the reference patterns and the pattern to be reviewed can be detected. Further, another pattern to be recognized is in sequence presented on a display device, and membership functions of which the number is the same as the number of the reference patterns are prepared on the basis of the output of the pattern to be recognized, in the similar way to that of Example 4. However, the parallel shift of the input pattern can be allowed in such way, but its device can be simplified, and further easily integrated.

Any kind of optical correlation processing means can be used in the above example. Further, various kinds of joint Fourier transducing correlation means are proposed. For example, a light addressing type of liquid crystal light valve can be used in place of an electric addressing type of liquid light valve 35 in FIG. 1 using a screen 31, a two-dimensional transducing element 32 and a pattern processing device 33.

The element functioning as a spatial light modulator in the inventive method can be of electric addressing type and optical adressing type. Examples of the electric addressing type may be a liquid crystal panel as used in the above Example, and a ceramic element and crystal having a photoelectric effect, such as PLZT, KDP and BSO ($Bi_{12}SiO_{20}$) provided with matrix electrodes.

Examples of the optical addressing type may be the structure including the similar ceramic material combined with a photoconductive layer.

The material having a photorefractive effect, such as BSO and $BaTiO_3$ can change the refractive index induced by the electric field of photo-induced electron charge of the material depending on the intensity of the incident beam, and then, there is no need for providing a photoconductive layer. Such a spatial light modulator may be of transparent type or of reflecting type. However, when the reading-out beam will erase wholly the information formed in the element of optical addressing type by the addressing beam, the wavelength range of the reading-out beam should be separated from that of the addressing beam in order to avoid the influence of the reading-out beam on the recorded information.

When the element of the electric addressing type is used, the two dimensional image sensor and the driving circuit driving the electric addressing one are necessary to produce the input image, and therefore, there is provided an advantage of facilitating to process those signals therefor.

The inventive method can enable recognition and classification of a significantly large number of patterns, even with provision of a relatively lower number of reference patterns.

The uncertainty of analog processing, or optical processing of patterns can be removed by calculation of membership functions considering fluctuation due to time passage of spatial light modulator, and/or time fluctuation due to speckle noise on the basis of statistic parameters or statistic theory. Each of the correlations between the pattern to be classified and each of the reference patterns is calculated, and then, each of membership functions is calculated, and each of membership values is estimated from the membership functions using the "fuzzy theory" AND calculation so that significantly correct recognition and classification of patterns to be classified can be provided.

An appopriate combination of reference patterns is determined, and then, the provision of only a small number of reference patterns can enable recognition or classification of the patterns to be reviewed, in a very high speed, and with high correctness. If an additional pattern to be recognized or classified is added to the set of patterns to be recognized, an additional membership function of the respective correlation of this additional pattern with each of the reference patterns can be easily prepared, so that recognition of the additional pattern can be easily proceeded.

Even where the recognition of patterns is confusable, the probability of recognition can be easily improved by adding one or a small number of reference patterns to the old set of reference patterns so as to produce a new set of reference patterns enabling complete recognition of patterns. The width of the range of the membership function can be adjusted depending on the utility such as recognition, classification and association of patterns, independent of the fluctuation in the optical process. Then, flexible treatment can be accomplished.

Even when imperfect patterns or patterns with excess information should be recognized or classified, normalization of the correlation output on the basis of transmission or reflection intensities of patterns to be reviewed and the reference patterns can improve the performance of recognition of patterns.

The number of reference patterns to be compared with the pattern to be classified can be drastically reduced by the inventive method.

While the present invention has been described with reference to the particular illustrative embodiments, it is not to be restricted by those embodiments but only the appended claims.

## Claims

1. An optical method of recognition and/or classification of an unknown pattern or image as belonging to a specific class, on a real time basis, comprising the steps of:

   (a) predetermining appropriate reference patterns;
   (b) repeatedly optically measuring a cross-correlation output between each of the reference patterns and a pattern in a known class sufficient times to produce a statistically significant result;
   (c) forming a convex membership function for each reference pattern relative to the said pattern in said known class by:

   (i) calculating an average value of the cross-correlation outputs measured for each reference pattern;
   (ii) calculating a parameter to represent deviation of the measured correlation outputs from said average value, and
   (iii) forming a convex membership function corresponding to each of the reference patterns on the basis of said average value and said calculated parameter, the convex membership function providing an indication of membership values for each reference pattern relative to the pattern of said known class;

   (d) repeating steps (b) and (c) with another pattern in a known class until convex membership functions are obtained for each such pattern;
   (e) performing steps (b) and (c) between the unknown pattern and each of the reference patterns respectively;
   (f) calculating membership values for each reference pattern relative to said unknown pattern;
   (g) estimating the smallest or average value of the membership values calculated in step (f), and
   (h) comparing the smallest or average membership value estimated in step (g) with the convex membership functions estimated in step (c), thereby to provide an indication of how much the unknown pattern belongs to the pattern of a known class.

2. A method as claimed in claim 1 comprising selecting a set of first reference patterns from said reference patterns by

   (i) for each reference pattern, calculating an area of a region in which there is mutual overlapping of the convex membership functions associated with the said patterns in a known class, or, calculating a maximum membership value in any such region;
   (ii) counting the number of regions in which said area or maximum membership value exceeds a predetermined area or value respectively for each reference pattern;
   (iii) choosing a reference pattern having the lowest number of said regions in which said area or maximum membership value exceeds a predetermined area or value and including that chosen pattern in a set of first reference patterns, and
   (iv) adding to the set, the reference pattern having the next lowest number of regions, thereby to produce a set of first reference patterns for use in the optical cross-correlation of step (g).

3. A method as claimed in claim 2, wherein further patterns are selectively added to the said set of first reference patterns by:

   (v) successively adding the reference pattern having the next lowest number of regions;
   (vi) counting in all combinations of pairs of patterns in known classes, the number of overlapping ranges of the membership functions corresponding to the reference patterns having an area that is larger than a predetermined area
   (vii) counting the number of pairs at which the number of overlapping ranges matches the number of reference patterns, and
   (viii) stopping adding reference patterns into the said set, when the counted number of pairs is less than a predetermined number.

4. An optical method as claimed in claim 1, wherein said cross-correlation output between the specific patterns or the unknown pattern and each of said reference patterns is a peak value.

5. An optical method as claimed in claim 1, wherein said cross-correlation output is a whole light power found in a distribution range of the cross-correlation output between the specific patterns or the unknown pattern and each of said reference patterns.

6. An optical method as claimed in claim 1, wherein said cross-correlation output is an average light power found in a distribution range of the cross-correlation output between the specific patterns or the unknown pattern and each of said reference patterns.

7. An optical method as claimed in claim 1, wherein said cross-correlation output with the specific patterns or the unknown pattern comprises signals from a two-dimensional image sensor (43).

8. An optical method as claimed in claim 7, wherein said cross-correlation output is normalized by all light quantity from all of the specific patterns or the unknown pattern and the reference patterns detected by said two-dimensional image sensor (43).

9. An optical method as claimed in claim 1, wherein said cross-correlation output is obtained by using a filter (161) prepared by using a Fourier transform hologram.

10. An optical method claim 1, wherein said cross-correlation output is produced by Fourier transforming in parallel, said specific pattern and each of said reference patterns to produce an intensity pattern, and Fourier transforming optically and in parallel the resulting respective intensity pattern.

11. An optical method as claimed in claim 1, wherein said cross-correlation outputs comprise a light quantity of a reflection mode or transparent mode, that is obtained by superposing the pattern to be reviewed with each of the reference patterns expressed in terms of light transparent distribution or light reflection distribution, and subsequently irradiating the pattern to be reviewed with an incoherent beam to produce a transparent or reflection beam respectively.

**Patentansprüche**

1. Optisches Verfahren zur Erkennung und/oder zur Klassifikation in eine bestimmte Klasse von unbekannten Mustern oder Bildern in Echtzeit, mit den Schritten:

   (a) Vorbestimmung geeigneter Referenzmuster;
   (b) so oft wiederholte optische Messung eines Kreuz-Korrelationsergebnisses zwischen jedem der Referenzmuster und einem Muster aus einer bekannten Klasse, bis ein statistisch signifikantes Ergebnis vorliegt;
   (c) Bildung einer konvexen Zugehörigkeitsfunktion für jedes Referenzmuster in bezug auf das genannte Muster aus der bekannten Klasse durch

   (i) Berechnung eines Mittelwertes aus den gemessenen Kreus-Korrelationsergebnissen für jedes Referenzmuster;
   (ii) Berechnung eines Parameters, der die Abweichung der Kreus-Korrelationsergebnisse vom genannten Mittelwert repräsentiert; und
   (iii) Bildung einer konvexen Zugehörigkeitsfunktion zu jedem der Referenzmuster auf der Basis des genannten Mittelwertes und des genannten berechneten Parameters, wobei die konvexe Zugehörigkeitsfunktion für jedes Referenzmuster Zugehörigkeistwerte in bezug auf das Muster der genannten bekannten Klasse indiziert;

   (d) Wiederholung der Schritte (b) und (c) mit einem anderen Muster aus einer bekannten Klasse, bis konvexe Zugehörigkeitsfunktionen für jedes solche Muster erhalten wurden;
   (e) Ausführung der Schritte (b) und (c) zwischen dem unbekannten Muster und jedem der Referenzmuster;
   (f) Berechnung von Zugehörigkeitswerten für jedes der Referenzmuster in bezug auf das unbekannte Muster;
   (g) Abschätzung des kleinsten Wertes oder des Mittelwertes der in Schritt (f) berechneten Zugehörigkeitswerte;
   (h) Vergleich des in Schritt (g) abgeschätzten kleinsten Wertes oder Mittelwertes mit den in Schritt (c) bestimmten konvexen Zugehörigkeitsfunktionen, wodurch ein Maß dafür gewonnen wird, wie sehr das unbekannte Muster zu dem Muster einer bekannten Klasse gehört.

2. Verfahren nach Anspruch 1, bei welchem aus den Referenzmustern eine Menge von ersten Referenzmustern ausgewählt wird, indem

   (i) für jedes Referenzmuster die Fläche einer Region, in welcher wechselseitige Überlappung zwischen den konvexen Zugehörigkeitsfunktionen der genannten Muster in einer bekannten Klasse besteht, berechnet wird, oder für jede solche Region der maximale Zugehörigkeitswert berechnet wird;
   (ii) für jedes Referenzmuster die Anzahl an Regionen, in denen die genannte Fläche oder der maximale Zugehörigkeitswert eine vorgegebene Fläche oder einen vorgegebenen Wert übersteigt, bestimmt wird;
   (iii) das Referenzmuster mit der kleinsten Anzahl an Regionen, in denen die genannte Fläche oder der maximale Zugehörigkeitswert die vorgegebene Fläche bzw. den vorgegebenen Wert übersteigt, ausgewählt wird und dieses gewählte Referenzmusters in eine Menge erster Referenzmuster aufgenommen wird, und
(iv) zu dieser Menge das Referenzmuster mit der nächstkleinen Anzahl an Regionen hinzugefügt wird, wodurch eine Menge erster Referenzmuster für die optische Kreus-Korrelation in Schritt (g) erhalten wird.

3. Verfahren nach Anspruch 2, bei welchem zu der Menge erster Referenzmuster weitere Referenzmuster selektiv hinzugefügt werden, indem

(v) sukzessiv das jeweilige Referenzmuster mit der nächstkleinen Anzahl an Regionen hinzugefügt wird;
(vi) für alle Kombinationen von Paaren von Mustern in bekannten Klassen die Anzahl der überlappenden Bereiche der zu den Referenzmustern gehörenden Zugehörigkeitsfunktionen mit einer Fläche, die größer ist als eine vorgegebene Fläche, bestimmt wird;
(vii) die Anzahl an Paaren gezählt wird, bei denen die Anzahl überlappender Bereiche mit der Anzahl der Referenzmuster übereinstimmt; und
(viii) das Hinzufügen von Referenzmustern zur genannten Menge beendet wird, sobald die gezählte Anzahl von Paaren kleiner als eine vorgegebene Zahl ist.

4. Verfahren nach Anspruch 1, wobei das Kreuz-Korrelationsergebnis zwischen den bestimmten Mustern oder dem unbekannten Muster und jedem der Referenzmuster ein Spitzenwert ist.

5. Verfahren nach Anspruch 1, wobei das Kreuz-Korrelationsergebnis die gesamte Lichtleistung ist, die in einem Verteilungsbereich des Kreuz-Korrelationsergebnisses zwischen den bestimmten Mustern oder dem unbekannten Muster und jedem der Referenzmuster gefunden wird.

6. Verfahren nach Anspruch 1, wobei das Kreuz-Korrelationsergebnis die mittlere Lichtleistung ist, die in einem Verteilungsbereich des Kreuz-Korrelationsergebnisses zwischen den bestimmten Mustern oder dem unbekannten Muster und jedem der Referenzmuster gefunden wird.

7. Verfahren nach Anspruch 1, wobei das Kreuz-Korrelationsergebnis mit den bestimmten Mustern oder dem unbekannten Muster Signale von einem zweidimensionalen Bildsensor (43) enthält.

8. Verfahren nach Anspruch 7, wobei das Kreuz-Korrelationsergebnis mit der gesamten Lichtmenge von allen bestimmten Mustern oder dem unbekannten Muster und den Referenzmustern normalisiert wird, die vom zweidimensionalen Bildsensor (43) detektiert wird.

9. Verfahren nach Anspruch 1, wobei das Kreuz-Korrelationsergebnis durch Verwendung eines Filters (161) erhalten wird, der unter Benutzung eines Fouriertransformations-Hologramms vorbereitet wurde.

10. Verfahren nach Anspruch 1, wobei das Kreuz-Korrelationsergebnis erzeugt wird, indem parallel des spezielle Muster und jedes der Referenzmuster zu einem Intensitätsmuster Fourier-transformiert werden, und indem das resultierende Intensitätsmuster optisch und parallel Fourier-transformiert wird.

11. Verfahren nach Anspruch 1, wobei die Kreuz-Korrelationsergebnisse eine Lichtmenge aus einem reflektierenden oder einem transparenten Modus enthalten, die erhalten wird durch Überlagerung des zu prüfenden Musters mit jedem der in einer Lichttransparenz-Verteilung oder Lichtreflektivitäts-Verteilung ausgedrückten Referenzmuster, wobei anschließend das zu prüfende Muster mit einem inkohärenten Strahl bestrahlt wird, um einen Transparenz- bzw. Relexionsstrahl zu erzeugen.

## Revendications

1. Procédé optique de reconnaissance et/ ou de classification d'une forme ou d'une image inconnue pour déterminer son appartenance à une classe spécifique, en temps réel, comprenant les étapes consistant à :

(a) prédéterminer des formes de référence convenables ;
(b) mesurer de manière optique et de manière répétitive une sortie de corrélation croisée entre chacune des formes de référence et une forme appartenant à une classe connue un nombre de fois suffisant pour produire un résultat significatif au plan statistique ;
(c) former une fonction d'appartenance convexe pour chaque forme de référence relativement à ladite forme dans ladite classe en :

(i) calculant une valeur moyenne des sorties de corrélation croisée mesurées pour chaque forme de référence ;
(ii) calculant un paramètre pour représenter un écart des sorties de corrélation mesurée par rapport à ladite valeur moyenne, et

(iii) formant une fonction d'appartenance convexe correspondant à chacune des formes de référence sur la base de ladite valeur moyenne et dudit paramètre calculé, la fonction d'appartenance convexe fournissant une indication de valeurs d'appartenance pour chaque forme de référence relativement à la forme de ladite classe connue ;

(d) répéter les étapes (b) et (c) avec une autre forme de référence dans une classe connue jusqu'à ce que des fonctions d'appartenance convexes soient obtenues pour chaque telle forme ;

(e) effectuer les étapes (b) et (c) entre la forme inconnue et chacune des formes de référence, respectivement ;

(f) calculer des valeurs d'appartenance pour chaque forme de référence relativement à ladite forme inconnue ;

(g) estimer la valeur moindre ou moyenne des valeurs d'appartenance calculées à l'étape (f), et

(h) comparer la valeur d'appartenance moindre ou moyenne estimée à l'étape (g) avec les fonctions d'appartenance convexes estimées à l'étape (c), pour fournir ainsi une indication de combien la forme inconnue appartient à la forme d'une classe connue.

2. Procédé tel que revendiqué dans la revendication 1, comprenant la sélection d'un premier jeu de formes de référence à partir desdites formes de référence, en :

(i) calculant, pour chaque forme de référence, une zone d'une région dans laquelle il existe un recouvrement mutuel des fonctions d'appartenance convexes associées aux dites formes dans une classe connue, ou, en calculant une valeur d'appartenance maximum dans toute telle région ;

(ii) comptant le nombre de régions dans lesquelles ladite zone ou ladite valeur d'appartenance maximum dépasse une zone ou une valeur prédéterminée respectivement pour chaque forme de référence ;

(iii) choisissant une forme de référence ayant le plus faible nombre desdites régions dans lesquelles ladite zone ou valeur d'appartenance maximum dépasse une valeur ou une zone prédéterminée et en incluant cette forme particulière choisie dans un jeu de premières formes de référence, et

(iv) en ajoutant au jeu, la forme de référence présentant le plus faible nombre suivant de régions, pour produire ainsi un jeu de premières formes de référence à utiliser dans la corrélation croisée optique de l'étape (g).

3. Procédé tel que revendiqué dans la revendication 2, dans lequel des formes supplémentaires sont ajoutées de manière sélective au dit jeu de premières formes de référence en :

(v) ajoutant successivement la forme de référence présentant le plus faible nombre suivant de régions ;

(vi) comptant dans toutes les combinaisons de paires de formes des classes connues, le nombre de plages de recouvrement des fonctions d'appartenance correspondant aux formes de référence présentant une zone qui est plus grande qu'une zone prédéterminée ;

(vii) comptant le nombre de paires pour lesquelles le nombre de plages se recouvrant s'accorde au nombre de formes de référence, et

(viii) arrêtant d'ajouter des formes de référence dans ledit jeu, lorsque le nombre de paires comptées est inférieur à un nombre prédéterminé.

4. Procédé optique tel que revendiqué dans la revendication 1, dans lequel ladite sortie de corrélation croisée entre les formes spécifiques ou la forme inconnue et chacune des formes de référence présente une valeur de crête.

5. Procédé optique tel que revendiqué dans la revendication 1, dans lequel ladite sortie de corrélation croisée est une intégralité de la puissance lumineuse trouvée dans une plage de distribution de la sortie de corrélation croisée entre les formes spécifiques ou la forme inconnue et chacune desdites formes de référence.

6. Procédé optique tel que revendiqué dans la revendication 1, dans lequel ladite sortie de corrélation croisée est une puissance lumineuse moyenne trouvée dans une plage de distribution de la sortie de corrélation croisée entre les formes spécifiques ou la forme inconnue et chacune des dites formes de référence.

7. Procédé optique tel que revendiqué dans la revendication 1, dans lequel ladite sortie de corrélation croisée entre les formes spécifiques ou la forme inconnue comprend des signaux issus d'un capteur d'images bidimensionnel (43).

8. Procédé optique tel que revendiqué à la revendication 7, dans lequel ladite sortie de corrélation croisée est normalisée par la quantité totale de lumière issue de chacune des formes spécifiques ou de la forme inconnue et les formes de référence détectée par ledit capteur d'images bidimensionnel (43).

9.  Procédé optique tel que revendiqué dans la revendication 1, dans lequel ladite sortie de corrélation croisée est obtenue en utilisant un filtre (161) préparé en utilisant un hologramme de transformée de Fourier.

10. Procédé optique conforme à la revendication 1, dans lequel ladite sortie de corrélation croisée est produite en traitant selon une transformation de Fourier en parallèle, ladite forme spécifique et chacune des dites formes de référence pour produire une forme d'intensité, et en transformant de manière optique par une transformation de Fourier et en parallèle la forme d'intensité respective résultante.

11. Procédé optique conforme à la revendication 1, dans lequel les dites sorties de corrélation croisée comprennent une quantité de lumière d'un mode de réflexion ou d'un mode de transmission, qui est obtenue en superposant la forme à revoir avec chacune des formes de référence exprimée en termes de distribution de lumière transmise ou de distribution de lumière réfléchie, et en illuminant ensuite la forme à revoir avec un faisceau incohérent pour produire un faisceau de transparence ou de réflexion respectivement.

FIG. 1

FIG. 2

E    V
  H

FIG. 3

o        ·

FIG. 4

MEMBERSHIP VALUE

V          E

b          a

CORRELATION
OUTPUT INTENSITY

FIG. 5

MEMBERSHIP VALUE

E   V

b       a

CORRELATION
OUTPUT INTENSITY

FIG. 6

CORRELATION
OUTPUT INTENSITY

FIG. 7

| | | MEMBERSHIP VALUE | |
|---|---|---|---|
| | | E | V |
| PATTERN | H | 1 | 1 |
| | N | 0 | 1 |
| | W | 0 | 0 |
| | ┆ | | |

FIG. 8

(a)    E
       H

(b)    E
      H

(c)    •
      . o
       •

# FIG. 9

## MEMBERSHIP FUNCTION

# FIG.10

| | | | | | | | | |
|---|---|---|---|---|---|---|---|---|
| A | (14.8199) | (44.3925) | A | 100 % | | | | |
| E | (80.0164) | (19.1256) | E | 100 % | | | | |
| H | (34.1394) | (24.8284) | H | 100 % | | | | |
| N | (31.522) | (31.4905) | N | 100 % | | | | |
| T | (53.7364) | (30.3136) | T | 100 % | | | | |
| L | (55.4004) | (25.0414) | T | 21.843 % | L | 100% | | |
| O | (21.5404) | (23.9849) | O | 100 % | | | | |
| I | (50.0809) | (26.449 ) | T | 68.7639% | L | 17.6659% | I | 100 % |
| K | (44.2551) | (37.1887) | K | 100 % | M | 64.8192% | | |
| M | (41.7666) | (38.7179) | K | 35.378% | M | 100% | | |
| V | (14.7009) | (81.8856) | V | 99.0819% | | | | |
| W | (36.0289) | (50.3511) | W | 100 % | | | | |
| X | (22.8047) | (69.4826) | X | 100 % | | | | |
| Y | (21.1552) | (56.2913) | Y | 94.7075% | | | | |
| Z | (46.0677) | (45.7495) | Z | 100 % | | | | |
| A | (13.215 ) | (44.5128) | A | 95.0843% | | | | |
| E | (75.7679) | (18.4227) | E | 31.8977% | | | | |
| H | (34.8843) | (24.9244) | H | 100% | | | | |
| N | (30.0191) | (29.4622) | N | 97.7229% | | | | |
| T | (51.4392) | (29.238 ) | T | 100 % | I | 59.5684% | | |
| L | (53.1335) | (23.8895) | L | 100 % | I | 3.09244% | | |
| O | (19.286 ) | (24.5148) | O | 100 % | | | | |
| I | (47.2472) | (28.3379) | T | 31.782% | I | 100% | | |
| K | (44.0927) | (37.9645) | K | 100 % | M | 70.2321% | | |
| M | (41.0191) | (40.0013) | K | 10.46% | M | 100% | | |
| V | (13.9882) | (81.5805) | V | 100 % | | | | |
| W | (35.7778) | (47.0888) | W | 83.8287% | | | | |
| X | (22.5819) | (67.8074) | X | 100 % | | | | |
| Y | (18.6982) | (57.0579) | Y | 100 % | | | | |
| Z | (46.2571) | (42.3353) | K | 5.28399% | Z | 56.1539% | | |
| A | (14.9343) | (43.6095) | A | 100 % | | | | |
| E | (76.2183) | (17.1847) | E | 46.9098% | | | | |
| H | (34.2229) | (23.2564) | H | 100 % | | | | |
| N | (29.0664) | (30.7548) | N | 100 % | | | | |
| T | (51.3787) | (29.0986) | T | 100 % | I | 61.5845% | | |
| L | (53.5556) | (23.098 ) | L | 100 % | | | | |
| O | (18.5556) | (23.597 ) | O | 84.6132% | | | | |
| I | (45.213 ) | (29.8922) | I | 32.8929% | | | | |
| K | (44.1078) | (36.5595) | K | 100 % | M | 64.0783% | | |
| M | (40.716 ) | (39.6279) | K | .356925% | M | 100% | | |
| V | (14.0072) | (80.5141) | V | 100 % | | | | |
| W | (35.261 ) | (47.094 ) | W | 84.0039% | | | | |
| X | (21.9362) | (70.4852) | X | 100 % | | | | |
| Y | (19.0861) | (55.9987) | Y | 100 % | | | | |
| Z | (45.5371) | (44.9375) | Z | 91.707% | | | | |

# FIG.11

# FIG.12

INCOHERENT BEAM

# FIG.13

# FIG.14

# FIG. 15

# FIG. 16

# FIG. 17

## FIG. 18

| | OVERLAP AREA OF MEMBERSHIP FUNCTION | | |
|---|---|---|---|
| | E | V | X |
| COMBINATION OF PATTERNS H−N | 0 | 0.75 | 0.75 |
| COMBINATION OF PATTERNS H−W | 0.1 | 3 | 6 |
| COMBINATION OF PATTERNS N−W | 0.75 | 0 | 0.75 |

## FIG. 19

| | MAXIMUM MEMBERSHIP VALUE IN OVERLAP AREA | | |
|---|---|---|---|
| | E | V | X |
| COMBINATION OF PATTERNS H−N | 0 | 0.5 | 1 |
| COMBINATION OF PATTERNS H−W | 0.2 | 1 | 1 |
| COMBINATION OF PATTERNS N−W | 0.5 | 0 | 1 |

## FIG. 20

| | NUMBER OF TRANSPOSITION AREAS | |
|---|---|---|
| | 10 | 20 |
| NUMBER OF REFERENCE PATTERNS 6 | 60.67 % | 99.22 % |
| NUMBER OF REFERENCE PATTERNS 7 | 95.13 | 99.96 |
| NUMBER OF REFERENCE PATTERNS 8 | 99.50 | 1 |
| NUMBER OF REFERENCE PATTERNS 9 | 99.95 | 1 |

# FIG. 21

| | | MEMBERSHIP VALUE | |
| --- | --- | --- | --- |
| | | E | V |
| PATTERN | H | 1 | 1 |
| | N | 0 | 1 |
| | W | 0 | 0 |
| | ┊ | | |

# FIG. 22

FIG. 23

111  112       116        161              131      151

113              122              122        143